(19) Europäisches Patentamt
European Patent Office
Office européen des brevets

(11) Publication number: **0 086 955**
**B1**

(12) # EUROPEAN PATENT SPECIFICATION

(45) Date of publication of patent specification: **10.09.86**

(51) Int. Cl.[4]: **C 08 L 71/04,** C 08 K 3/34, C 08 K 7/02

(21) Application number: **83100458.5**

(22) Date of filing: **20.01.83**

(54) **Composition of PPE, impact modifier, mineral filler and PTFE.**

(30) Priority: **08.02.82 US 347077**

(43) Date of publication of application:
**31.08.83 Bulletin 83/35**

(45) Publication of the grant of the patent:
**10.09.86 Bulletin 86/37**

(84) Designated Contracting States:
**DE FR GB IT NL**

(58) References cited:
**US-A-4 355 126**

(73) Proprietor: **GENERAL ELECTRIC COMPANY**
**1 River Road**
**Schenectady New York 12305 (US)**

(72) Inventor: **Lee, Gim Fun, Jr.**
**11 Drawbridge Drive**
**Albany New York 12203 (US)**
Inventor: **Williams, Robert Alfred**
**R.D. 3, Box 51 Boehlke Drive**
**Selkirk New York 12158 (US)**

(74) Representative: **Schüler, Horst, Dr. European Patent Attorney et al**
**Kaiserstrasse 41**
**D-6000 Frankfurt/Main 1 (DE)**

**EP 0 086 955 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

BACKGROUND OF THE INVENTION

The term "polyphenylene ether resin" is well known as defining a class of thermoplastic materials which possess outstanding physical properties, including hydrolytic stability, dimensional stability and excellent dielectric characteristics. Methods of preparation are known in the art and described in the patent literature, e.g., Hay, U.S. Patent Nos. 3,306,874, and 3,306,875 and Stamatoff, U.S. Patent Nos. 3,257,357 and 3,257,358.

Other patents which show the preparation of polyphenylene ether resins include Bennett and Cooper, U.S. Patent Nos. 3,369,656 and 3,838,102, as well as Cooper and Bennett, U.S. Patent Nos. 3,642,699, 3,661,849 and 3,733,299.

It is known that when the polyphenylene ether resins are combined with polystyrene, the resulting compositions possess properties which are improved over the corresponding properties of either resin alone. See Cizek, U.S. Patent No. 3,383,435.

A shortcoming of these thermoplastic materials is their relatively poor resistance to electrical arcing. Such arcing is most conveniently quantized by the related parameter of tracking (often referred to as "arc tracking") resistance. It measures, for example, the ability of the thermoplastic composition to withstand extreme electrical stresses through the rate of formation of a carbonized path or track as two charged electrodes are drawn apart on its surface. Poor arc tracking resistance is especially undesirable for thermoplastic materials employed as electronic equipment components and housings.

It is known that the arc/tracking resistance of certain polymeric compositions may be improved through the incorporation of mineral fillers. It has recently been proposed that talc, in particular, when employed as a filler for a polyphenylene ether compositions provides considerable improvement in the arc tracking rate. This development is described in the Applicant's European Patent application No. 82 108 715.2.

Mineral fillers in general decrease the impact strength of polyphenylene ether compositions, however. This is a significant problem in the case of recently developed arc track resistant materials such as those referred to above because, in addition to increased arc tracking, good impact strength is also a desirable property for the compositions.

INTRODUCTION TO THE INVENTION

The discovery has now been made that the impact strength of mineral filled polyphenylene ether resin thermoplastic molding compositions is improved by the incorporation of a minor but effective amount of polytetrafluoroethylene resin.

It has further been discovered that with the addition of polytetrafluoroethylene resin, not only does the impact strength increase but also the flexural modulus and strength of the compositions are also improved. This is particularly advantageous for applications where greater stiffness is necessary such as in thin-walled section moldings.

DESCRIPTION OF THE INVENTION

Any of the polyphenylene ether resins are suitable for use in the invention. As previously indicated, such resins are well known and readily available. There are, however, preferred compositions components and these are homo- and copolymers having the formula

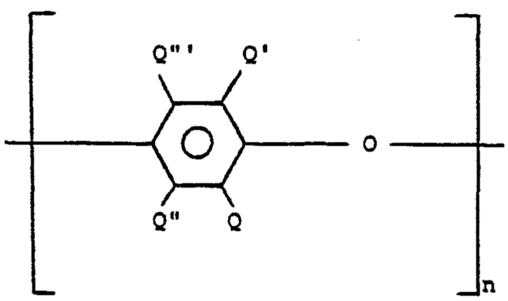

wherein Q, Q′, Q″ and Q‴, are independently selected from the group consisting of hydrogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atom and the phenol nucleus, and Q′, Q″, and Q‴ in addition may be halogen with the proviso that Q and Q′ are preferably free of a tertiary carbon atom; and n represents the total number of monomer residues and is an integer of at least 50.

Especially prefered is poly(2,6-dimethyl-1,4-phenylene) ether.

The polyphenylene ether resins can be prepared by procedures described in the above-mentioned patents.

The polyphenylene ether resin is in admixture with one or more polymeric impact modifiers. The impact modifier can be a styrene homopolymer in admixture or otherwise modified with an elastomeric material such as a natural or synthetic rubber, or a styrene containing elastomeric copolymeric or terpolymer.

By way of illustration, the impact modifier may be a homopolymer such as polystyrene, polychlorostyrene, poly(alpha-methyl styrene), or poly(para-methyl styrene) which has been modified by natural or synthetic rubber, for example, polybutadiene, polyisoprene, butyl rubber, EPDM rubber, natural rubber, polysulfide rubbers, polyurethane rubbers, etc., elastomeric styrene copolymers such as styrene-butadiene copolymers, styrene-acrylonitrile-butadiene-terpolymers (ABS), block copolymers of styrene and a diene in their various forms, for example, A—B, A—B—A, A—B—AB, A—B—A—B—A, etc., random or radial teleblock copolymers of these same materials, as well as hydrogenated forms of the linear, random and radial copolymers in which the aliphatic unsaturation, e.g., of the "B" (diene) block has been reduced; and admixtures of any of the above mentioned styrene homopolymers with any of the above mentioned elastomeric styrene co- and terpolymers.

Blends of the polyphenylene ether resin and impact modifier can contain these materials in virtually any desired proportion, e.g., from 20:1 to 1:2 parts by weight.

The mineral fillers are also individually well known and readily available. The mineral component can be selected, for instance, from among talc, clay, zinc oxide, titanium dioxide, barium sulfate, calcium carbonate, zinc sulfide, as well as any of the other materials suitable for use as fillers with polyphenylene ether resin.

Special mention is made of talc because of its effectiveness in reducing the UL arc/tracking rate of thermoplastic compositions (referring to the Underwriters Laboratories standard test procedure entitled "High Voltage Arc/Tracking Rate"; rates are desirably less than 1 inch/minute (2.54 cm/minute)).

To achieve the desired arc/tracking rates it is preferred to employ the mineral filler in an amount of at least about 40% by total composition weight, and usually from 40% to 60%.

The polytetrafluoroethylene resins preferably are microfibrillar materials, which are commercially available or can be prepared by known processes. They are normally white solids which are obtained, for instance, by polymerizing tetrafluoroethylene in aqueous media in the presence of a free radical catalyst at a pressure from 7 to 70 kg/cm$^2$ (6.89 to 68.9 bar) and a temperature from 0° to 200°C. A preferred commercial material is DuPont's Teflon 6.

The polytetrafluoroethylene resin is included in minor but effective amounts to achieve the described benefits. Usually, amounts of from 0.1 to 10 parts by weight based on the total composition are sufficient and these are preferred.

The composition can and also usually do contain other ingredients, and particularly non-resinous agents typically present in polyphenylene ether resin molding compositions to improve other physical and chemical properties of the moldings. These agents include flame retardants, plasticizers, antioxidants, strengthening fibers (for example, glass fibers and graphite whiskers), dyes and pigments.

The polyphenylene ether resins are known to be homogeneously admixable with elastomeric materials such as the modifiers described above in virtually all proportions. Preferably, however, the polyphenylene ether and impact modifier are present in a weight ratio within the range 25:1 to 1:2.

The supplementary non-resinous agents are present in total amount between about 1% and 20%, so as to provide the benefits which these materials have conferred in the past on shaped molded articles made from thermoplastic resins.

The present kinds of compositions can be prepared by any number of known procedures. In one such procedure, the ingredients are tumbled or mechanically stirred to form a preblend, the preblend is passed through an extruder at an elevated temperature, the extrudate is cooled and cut or ground into particles which are then fed to an injection molding device.

The following examples are given by way of illustration only and are not intended as a limitation on the scope of this invention. Unless otherwise specified herein, all proportions are provided on a weight basis.

## Examples

Compositions according to the invention were prepared using poly(2,6-dimethyl-1,4-phenylene ether) resin (PPO, General Electric Co.), hydrogenated styrene-butadiene-styrene block copolymer (Shell's Kraton® G1652 resin), talc (Englehard's EMTAL® 599), triphenyl phosphate flame retardant/plasticizer, isopropylated triphenyl phosphate (FMC's Kronitex® 50) stabilizer/flame retardant and microfibrillar polytetrafluoroethylene resin (DuPont's Teflon® 6), in the amounts noted below.

The ingredients were blended, passed through a single screw Brabender or twin screw Werner-Pfleiderer extruder at 232°C, and molded into test bars at an injection temperature of 226°C.

The compositions and test results are set forth in the Tables below.

TABLE; COMPOSITION

| Composition No. | PPO | K—50 | TPP | KG1652 | EMTAL 599 | T—6 |
|---|---|---|---|---|---|---|
| Control | 60 | 20 | 20 | 10 | 43 | — |
| 1 | 60 | 20 | 20 | 10 | 43 | 1.0 |
| 2 | 60 | 20 | 20 | 10 | 43 | 2.0 |
| 3 | 60 | 20 | 20 | 10 | 43 | 5.0 |

TABLE; PROPERTIES

| Composition No. | TY | TS | TE | Izod | Gard | FM | FS |
|---|---|---|---|---|---|---|---|
| Control | 0,2812 | 0,2460 | 55 | 5,9873 | 172,8 | 21,3712 | 0,4358 |
| 1 | 0,2952 | 0,2530 | 49 | 10,3418 | 172,8 | 23,1287 | 0,4358 |
| 2 | 0,2952 | 0,2601 | 55 | 13,0633 | 172,8 | 28,8230 | 0,4499 |
| 3 | 0,3374 | 0,2882 | 56 | 11,4304 | 195,8 | 30,7211 | 0,4710 |

In the foregoing Table, the abbreviations for the properties designate the following:

TY = Tensile yield strength, $kg/cm^2 \cdot 10^{-3}$

TS = Tensile strength, $kg/cm^2 \cdot 10^{-3}$

TE = Tensile elongation, %

Izod = Izod impact strength, $\frac{cm\ kg}{cm}$

Gard = Gardner impact strength, cm kg

FM = Flexural modulus, $kg/cm^2$

FS = Flexural strength, $kg/cm^2$

The figures in the table can be expressed in S.I. units by using the following factors:

$$1\ kg/cm^2 = 9.81 \cdot 10^{-2}\ N/mm^2$$

$$1\ \frac{kg\ cm}{cm} = 9.81\ \frac{Nmm}{mm}$$

$$1\ kg\ cm = 9.81 \cdot 10^{-2}\ Nm$$

Obviously other modifications and variations of the present invention are possible in light of the above teachings. For instance, instead of poly(2,6-dimethyl-1,4-phenylene) ether, there can be used a copolymer such as poly(2,6-dimethyl-*co*-2,3,6-trimethyl-1,4-phenylene) ether. The compositions can also include other ingredients such as one or more of the non-resinous modifying agents mentioned above.

**Claims**

1. A thermoplastic composite, comprising an intimate admixture of
(a) a blend of a polyphenylene ether resin, an impact modifier and a mineral filler; and
(b) a notched Izod impact strength enhancing amount of a polytetrafluoroethylene resin.

2. A composition according to Claim 1, in which the polyphenylene ether resin is poly(2,6-dimethyl-1,4-phenylene ether).

3. A composition according to Claim 1, in which the impact modifier is a block copolymer of styrene and butadiene.

4. A composition according to Claim 3, in which the butadiene has been hydrogenated.

5. A composition according to Claim 1, in which the mineral filler is talc.

6. A composition according to Claim 1, in which the polytetrafluoroethylene is microfibrillar.

7. A composition according to Claim 1, which contains from 0.1 to 10 parts of the polytetrafluoroethylene resin.

8. A composition according to Claim 1, which comprises the polyphenylene ether resin and impact modifier in a weight ratio of from 25:1 to 1:2.

9. A composition according to Claim 1, which contains from 40 to 60% of mineral filler based on the total weight of the composition.

10. A composition according to Claim 1, which further includes a plasticizer and/or flame retardant.

11. A composition according to Claim 10, which contains triphenyl phosphate.

**Patentansprüche**

1. Thermoplastische Zusammensetzung, enthaltend eine innige Mischung aus

(a) einer Mischung eines Polyphenylenätherharzes, eines die Schlagfestigkeit modizierenden Mittels und eines mineralischen Füllstoffes, und

(b) einer die Izod-Kerbschlagfestigkeit vergrößernden Menge eines Polytetrafluoräthylenharzes.

2. Zusammensetzung nach Anspruch 1, worin das Polyphenylenätherharz Poly(2,6-dimethyl-1,4-phenylenäther) ist.

3. Zusammensetzung nach Anspruch 1, worin das die Schlagfestigkeit modifizierende Mittel ein Blockcopolymer von Styrol und Butadien ist.

4. Zusammensetzung nach Anspruch 3, worin das Butadien hydriert worden ist.

5. Zusammensetzung nach Anspruch 1, worin der mineralische Füllstoff Talk ist.

6. Zusammensetzung nach Anspruch 1, worin das Polytetrafluoräthylen eine mikrofibrilierte Form aufweist.

7. Zusammensetzung nach Anspruch 1, die 0,1 bis 10 Teile des Polytetrafluoräthylenharzes aufweist.

8. Zusammensetzung nach Anspruch 1, die das Polyphenylenätherharz und das die Schlagfestigkeit modifizierende Mittel in einem Gewichtsverhältnis von 25:1 bis 1:2 enthält.

9. Zusammensetzung nach Anspruch 1, die 40 bis 60% des mineralischen Füllstoffes, bezogen auf das Gesamtgewicht der Zusammensetzung, enthält.

10. Zusammensetzung nach Anspruch 1, die weiterhin einen Weichmacher und/oder ein flammhemmendes Mittel umfaßt.

11. Zusammensetzung nach Anspruch 10, die Triphenylphosphat enthält.

**Revendications**

1. Composition thermoplastique, comprenant un mélange intime de:

(a) un mélange d'une résine de poly(oxyphénylène), d'un agent de modification de la résistance aux chocs et d'une charge minérale; et

(b) une quantité d'une résine de polytétrafluoroéthylène efficace pour augmenter la résistance aux chocs Izod sur éprouvette entaillée.

2. Composition selon la revendication 1, dans laquelle la résine de poly(oxyphénylène) est un poly(oxydiméthyl-2,6-phénylène-1,4).

3. Composition selon la revendication 1, dans laquelle l'agent de modification de la résistance aux chocs est un copolymère séquencé de styrène et de butadiène.

4. Composition selon la revendication 3, dans laquelle le butadiène a été hydrogéné.

5. Composition selon la revendication 1, dans laquelle la charge minérale est le talc.

6. Composition selon la revendication 1, dans laquelle le polytétrafluoroéthylène est microfibrillaire.

7. Composition selon la revendication 1, caractérisé en ce qu'elle contient de 0,1 à 10 parties de résine de polytétrafluoroéthylène.

8. Composition selon la revendication 1, caractérisée en ce qu'elle comprend la résine de poly(oxyphénylène) et l'agent de modification de la résistance aux chocs en un rapport pondéral compris entre 25:1 et 1:2.

9. Composition selon la revendication 1, caractérisée en ce qu'elle contient de 40 à 60% d'une charge minérale, exprimée par rapport au poids total de la composition.

10. Composition selon la revendication 1, caractérisée en ce qu'elle comprend encore un plastifiant et/ou un agent ignifugeant.

11. Composition selon la revendication 10, caractérisée en ce qu'elle contient du phosphate de triphényl.